# EUROPÄISCHE PATENTSCHRIFT

(11) **EP 3 243 378 B1**
(45) Veröffentlichungstag und Bekanntmachung des Hinweises auf die Patenterteilung: **26.08.2020**
(21) Anmeldenummer: 17169394.8
(22) Anmeldetag: 04.05.2017
(51) Int. Cl.: A01K 9/00

(54) **SAUGVORRICHTUNG UND HALTER HIERZU**
SUCTION DEVICE AND HOLDER FOR SAME
DISPOSITIF D'ASPIRATION ET SUPPORT ASSOCIÉ

(30) Priorität: 10.05.2016 DE 102016108580; 11.11.2016 DE 102016121642
(43) Veröffentlichungstag der Anmeldung: 15.11.2017
(73) Patentinhaber: H I K O GmbH, 89081 Ulm (DE)
(72) Erfinder: Hinterkopf, Martin, 89081 Ulm-Lehr (DE)
(74) Vertreter: Baur & Weber Patentanwälte PartG mbB

(56) Entgegenhaltungen:
- EP-A2- 0 958 740
- EP-B1- 2 160 942
- DE-U1-202014 103 535
- US-A- 5 638 769
- US-A1- 2010 292 637

## Beschreibung

Die Erfindung betrifft eine Saugvorrichtung, insbesondere für einen Tränkeimer oder für eine Tränkstation zur Aufzucht von Tieren, wie z. B. Kälber oder Lämmer, sowie einen Halter für eine derartige Saugvorrichtung.

Tränkeinrichtungen in Form eines Eimers sind aus dem Stand der Technik bekannt. So ist in der DE 87 12 611 U1 ein Eimer zum Tränken von Tieren beschrieben, der einen Saugzapfen an einer die Eimerwand durchdringenden Durchführung und eine Einrichtung zum Einhängen des Eimers in eine Tragvorrichtung aufweist, wobei die Einrichtung zum Einhängen wenigstens je einen Durchbruch in der Eimerwand auf der Seite des Saugzapfens und der gegenüber liegenden Seite und wenigstens einen Durchbruch in einer unterhalb des Eimerbodens liegenden Randzone aufweist.

Derartige Tränkeimer haben sich aufgrund ihrer Form und ihrer einfachen Handhabung in der landwirtschaftlichen Praxis, insbesondere zum Tränken von Kälbern und Lämmern seit vielen Jahrzehnten bewährt und werden auch von zahlreichen anderen Herstellern angeboten.

Derartige Tränkeimer werden mit einer entsprechenden Saugvorrichtung versehen, so dass Kälber oder Lämmer Flüssignahrung insbesondere Milch aus dem Behälter aufnehmen können. Derartige Saugvorrichtungen können beispielsweise ein Ventil umfassen.

So ist aus der EP 2 160 942 B1 eine Ventilvorrichtung für einen Saugnuckel zum Anschließen an eine seitliche Öffnung eines Säugetränkeeimers bekannt, bei der ein Ventilkörper mit einem Ventilkanal vorgesehen ist, an dessen dem Saugnuckel zugewandten Ende eine Ventilklappe vorgesehen ist, die einen Rückfluss von Nahrungsflüssigkeit in den Säugetränkeeimer durch den Ventilkanal hindurch stoppt. Dabei ist an dem dem Säugetränkeeimer zugewandten Ende des Ventilkörpers ein Saugrüssel ein- oder aufsteckbar und zum Verbinden des Saugnuckels mit der vom Säugetränkeeimer abgewandten Seite des Ventilkörpers ein mit dem Ventilkörper verbindbarer Bajonettverschluss oder Klickverschluss vorgesehen.

Aus der DE 10 2011 105 853 B3 ist eine Viehtränkeventilanordnung zum Anschließen an einen Behälter bekannt, die einen Saugnuckel umfasst, mit dessen Hilfe in dem Behälter befindliche Flüssigkeit von dem Vieh ansaugbar ist. Desweiteren umfasst die Viehtränkeventilanordnung einen Ventilkörper, der an dem Saugnuckel befestigbar ist und einen von der Flüssigkeit durchströmbaren Ventilkanal aufweist, sowie einen Steckhalter zur Befestigung am Behälter. Ferner wird in dieser Druckschrift ein Verfahren zur einfachen und schnellen Montage einer Viehtränkeventilanordnung an einem Behälter beschrieben.

Aus der DE 20 2014 103 535 U1 ist eine Viehsäugvorrichtung zum Anschluss an einen Tränkebehälter, insbesondere einen Tränkeeimer bekannt, die folgendes aufweist. Ein von einem zu tränkenden Tier erfassbaren Sauger mit einem in der Gebrauchslage an einer Tränkebehälterinnenwand anliegenden Saugerflansch, einen zur Aufnahme des Saugers ausgebildeten, einen Tränkebehälterinnenraum mit dem Sauger verbindenden Ventilkörper mit einem in der Gebrauchslage an dem Saugerflansch anliegenden Klemmflansch und einen Befestigungskörper, der in der Gebrauchslage in Wirkverbindung mit dem Ventilkörper befindlich den Saugerflansch flüssigkeitsdicht an der Tränkebehälterinnenwand festlegt. Der Saugerflansch weist dabei einen größeren Durchmesser auf als der Klemmflansch.

In der US 5,638,769 A wird ein Saugnuckel aus elastischem Material beschrieben, bei dem eine Einsenkung gebildet ist, die einer Öffnung eines Behälters angepasst sein kann. In das Innere des Saugnuckels kann ein mit einer Feder versehenes Ventil eingebracht werden.

In der EP 0 958 740 A2 ist eine Abgabeeinheit für Wasser oder Flüssignahrung für Kleintiere gezeigt, die mit einem Behälter über einen Bajonettverschluss an einem Griffzapfen verbunden werden kann.

10ln der US 2010/0292637 A1 ist eine Vorrichtung zur Abgabe von Milch gezeigt, bei der im Inneren eines Nuckels ein Grundgerüst eingebaut ist, das mit einer antimikrobiellen Beschichtung versehen sein kann.

Ältere Vorrichtungen für Tränkeimer sind auch aus der US 2,652,027 A, US 2,695,007 A und US 2,516,730 A bekannt.

Des Weiteren sind Tränkstationen bekannt, die an einem flächigen Befestigungselement ein oder mehrere Saugvorrichtungen aufweisen, die über ein Schlauchsystem mit Flüssignahrung versorgt werden. Die Saugvorrichtungen können dabei denjenigen für Tränkeimer entsprechen.

Ein bei der Konstruktion von Saugvorrichtungen für Tränkeimer bisher wenig beachtetes Problem kann darin gesehen werden, dass die oben beschriebenen Saugvorrichtungen typischerweise von einem Benutzer im Tränkeeimer montiert werden müssen, indem der Benutzer in den Tränkeeimer eingreift, um entsprechende Verbindungen zwischen den unterschiedlichen Haltevorrichtungen schaffen zu können. Dabei kann es jedoch vorkommen, dass der Benutzer durch Kontakt mit anderen Arbeitsoberflächen Verunreinigungen in den Tränkeimer einbringt, was wiederum die Infektionsgefahr bei der Verwendung derartiger Saugvorrichtung erhöhen würde oder aber umfangreiche Reinigungsarbeiten notwendig macht.

Es ist daher Aufgabe der Erfindung, eine Saugvorrichtung für Tränkeimer oder Tränkstationen zu schaffen, die im Vergleich zu bekannten Saugvorrichtungen einfacher an einem Tränkeimer oder einer Tränkstation befestigbar bzw. von diesem oder dieser lösbar ist.

Diese Aufgabe wird durch die Merkmale des Patentanspruchs 1 gelöst. Weitere vorteilhafte Ausgestaltungen der Erfindung sind jeweils Gegenstand der Unteransprüche. Diese können in technologisch sinnvoller Weise miteinander kombiniert werden. Die Beschreibung, insbesondere im Zusammenhang mit der Zeichnung, charakterisiert und spezifiziert die Erfindung zusätzlich. Gemäß der Erfindung wird eine Saugvorrichtung angegeben, insbesondere für einen Tränkeimer oder für eine Tränkstation zur Aufzucht von Tieren, wie z. B. Kälber oder Lämmer, umfassend einen entlang einer Längsachse angeordneten elastischen Saugnuckel, der eine an einer Innenseite eines Wandelements anbringbare Anlagefläche und in Richtung der Längsachse beabstandet zur Anlagefläche eine Gegenfläche aufweist, die als radiale Vorsprünge ausgebildet sind, so dass der Saugnuckel über die Gegenfläche durch eine Öffnung in dem Wandelement führbar ist, wobei der Abstand der Anlagefläche zur Gegenfläche an eine Wandstärke des Wandelements angepasst ist, und wobei ein Haltekörper mit einem Klappenventil von der Innenseite des Wandelements in einen durch den Saugnuckel begrenzten Hohlraum führbar und dort über eine Nut und ein korrespondierendes Gegenelement lösbar fixiert ist.

Die erfindungsgemäße Saugvorrichtung ist demnach zweiteilig ausgeführt und umfasst sowohl einen Saugnuckel als auch ein Haltekörper. Der elastisch ausgeführte Saugnuckel wird von der Innenseite des Wandelements durch die Öffnung hindurch geführt, so dass die Gegenfläche durch die Öffnung im Wandelement gleitet. Der Saugnuckel wird folglich zwischen der Anlagefläche und der Gegenfläche, die typischerweise in einem Abstand angeordnet sind, der der Wandstärke des Wandelements entspricht, in der Öffnung des Wandelements gehalten. Demnach kann der Saugnuckel auf einfache Weise durch Hindurchführen durch die Öffnung im Wandelement bereits aufgrund der elastischen Eigenschaften am Wandelement fixiert sein. Demnach ist es für einen Benutzer möglich, den Saugnuckel lediglich an seinem der Öffnung abgewandten Ende, an dem sich typischerweise die Saugöffnung befindet, zu greifen und durch die Öffnung im Wandelement durchzustecken. Zur weiteren Fixierung wird von der Innenseite des Wandelements der Haltekörper in den Saugnuckel eingeführt, wobei eine Fixierung des Halteelements im Saugnuckel durch das Zusammenspiel von Nut und korrespondierendem Gegenelement gegeben ist. Eine derartige Befestigung kommt ohne jegliches Werkzeug aus und erfordert auch keine filigranen Verschraubungen oder Anpassungen eines Steckriegels, wie dies im Stand der Technik üblicherweise vorgesehen ist. Demnach ist es für einen Benutzer der Saugvorrichtung möglich, die Montage oder die Demontage der Saugvorrichtung auf einfache Weise vorzunehmen, was insbesondere auch die Gefahr von Verschmutzungen der Oberflächen des Wandelements reduziert, da keine aufwändigen Befestigungsschritte durchgeführt werden müssen. Im Vergleich zu Saugvorrichtungen nach dem Stand der Technik, bei dem typischerweise der Benutzer mit einer Hand beispielsweise in einen Tränkeeimer greifen muss, um die Saugvorrichtung an der Behälteröffnung fest zu halten, während mit einer anderen Hand die entsprechenden Verriegelungsmechanismen aktiviert oder gelöst werden müssen, ist die Gefahr, dass das Innere der Tränkvorrichtung über bereits verschmutzte Stellen an den Armen oder Händen des Benutzers weiter verunreinigt werden deutlich geringer. Aufgrund des zweiteiligen Aufbaus ist auch vor oder nach einem Tränkvorgang eine Desinfektion der erfindungsgemäßen Saugvorrichtung ohne weiteres möglich.

Die Nut und das Gegenelement sind zwischen der Anlagefläche und der Gegenfläche angeordnet. Demnach wird der Saugnuckel über den Haltekörper in demjenigen Bereich über die Nut und das Gegenelement an dem Wandelement fixiert, der an der Außenfläche des Saugnuckels von dem Wandelement überdeckt ist. Demnach wird beim Einführen des Haltekörpers in den Saugnuckel in axialer Richtung ein Widerstand spürbar, der nach Erreichen der Endposition überwunden ist, so dass dem Benutzer eine taktile Rückmeldung bezüglich der korrekten Montage gegeben wird. Das vollständige Hindurchstecken des Saugnuckels durch die Öffnung des Wandelements wird ebenfalls durch Überwinden eines mechanischen Widerstands beim Durchziehen angezeigt, so dass auch hier die korrekte Endpositionslage fühlbar ist.

Die Nut ist auf dem Haltekörper und das korrespondierende Gegenelement ist auf dem Saugnuckel angeordnet.

Demnach wird eine Fixierung zwischen Haltekörper und Saugnuckel im Inneren der Öffnung am Wandelement geschaffen, die zum einen stabil genug ist, dass auch durch Ziehen bzw. Hin- und Herschwenken durch Kälber oder Lämmer kein Herausreißen des Saugnuckels erfolgt aber dennoch relativ einfach ohne Werkzeug lösbar ist.

Gemäß einer weiteren Ausführungsform der Erfindung ist die Anlagefläche in einer Ebene senkrecht zur Längsachse als Kreisringfläche ausgeführt.

Demnach ist die Anlagefläche gleichzeitig als Dichtfläche zwischen dem Saugnuckel und dem Inneren des Wandelements vorgesehen. Aufgrund der Vorspannung in axialer Richtung durch das Einführen des Saugnuckels zwischen Anlagefläche und Gegenfläche ist der Bereich der Kreisringfläche mit einer in Richtung der Außenseite des Wandelements orientierten Kraft beaufschlagt, die die Abdichtung zusätzlich unterstützt.

Gemäß einer weiteren Ausführungsform der Erfindung ist die Gegenfläche entlang der Längsachse mit einem abgerundeten Querschnitt gebildet.

Die Gegenfläche kann zum leichteren Durchführen durch die Öffnung des Wandelements mit einem abgerundeten Querschnitt versehen sein, der beispielsweise in Form eines nach außen gerichteten Halbkreises oder dergleichen geformt ist.

Gemäß einer weiteren Ausführungsform der Erfindung ist die Anlagefläche auf der der Innenseite des Wandelements zugewandten Seite eben ausgeführt. An dieser Seite der Anlagefläche kann sich der Haltekörper anschließen, so dass über entsprechend korrespondierende Planflächen eine homogene Saugvorrichtung entsteht.

Gemäß einer weiteren Ausführungsform der Erfindung weist der Haltekörper auf der Innenseite des Wandelements eine rohrförmige Verlängerung oder ein Anschluss für ein Rohr auf.

Demnach ist es möglich, die Erfindung sowohl mit Tränkeimern als auch mit Tränkstationen einzusetzen, wobei bei Tränkeimern sowohl Ausführungsformen mit unterschiedlich positionierten Austrittsöffnungen eingesetzt werden können. Durch die entsprechende rohrförmige Verlängerung kann dabei der Tränkeimer vollständig entleert werden. Bei der Verwendung im Zusammenhang mit Tränkstationen kann die Saugvorrichtung über ein Rohr oder einen Schlauch mit einem Zentralbehälter verbunden sein.

Gemäß einer weiteren Ausführungsform ist das Klappenventil an einem Haken oberhalb einer Öffnung im Haltekörper eingehängt.

Eine derartige an sich aus dem Stand der Technik bekannte Vorgehensweise ermöglicht es, auf einfache Weise ein Ventil zu bilden, das nur aus wenigen Bauelementen besteht und kostengünstig herstellbar ist. Die Ausgestaltung des Hakens kann dabei so erfolgen, dass das Klappenventil mit einer Art Verliersicherung am Haltekörper gehalten wird.

Gemäß einer weiteren Ausführungsform der Erfindung weisen der Saugnuckel und der Haltekörper im Bereich der Öffnung des Wandelements einen im Wesentlichen kreisförmigen Querschnitt auf.

Die Ausbildung eines kreisförmigen Querschnitts folgt der üblichen Gestaltung von Saugvorrichtungen, wobei jedoch prinzipiell auch andere Querschnitte denkbar wären.

Gemäß einer weiteren Ausführungsform der Erfindung ist der Saugnuckel aus einem elastischen Kunststoffmaterial, insbesondere einem thermoplastischen Elastomer gefertigt.

Dies ermöglicht eine kostengünstige Produktion der erfindungsgemäßen Saugvorrichtung.

Gemäß einer weiteren Ausführungsform der Erfindung ist der Haltekörper aus einem Kunststoffmaterial, insbesondere aus Polyacetal gefertigt.

Polyacetal, auch POM genannt, ermöglicht wiederum eine kostengünstige Fertigung.

Gemäß einer weiteren Ausführungsform der Erfindung sind der Saugnuckel und/oder der Haltekörper mit einer antimikrobiellen Beschichtung versehen.

Demnach kann durch die antimikrobielle Funktion der verwendeten Kunststoffe die Vermehrung und Bildung von Krankheitserregern, wie Bakterien oder ähnlichem eingedämmt werden. Dies führt zu einer Steigerung der Stallhygiene, was sich in einer Verbesserung der Gesundheit der Tiere und in einem größeren wirtschaftlichen Nutzen für den Landwirt bemerkbar macht. Zur Erzeugung einer antimikrobiellen Wirkung kann ein entsprechendes Additiv dem Kunststoffmaterial zugefügt werden. Hierbei kann insbesondere ein antimikrobielles Additiv auf Metallbasis, beispielsweise auf Silberbasis zugeführt werden.

Gemäß einer weiteren Ausführungsform der Erfindung ist das Wandelement Teil eines Tränkeimers.

Demnach ist es möglich, die erfindungsgemäße Saugvorrichtung bei dem aus dem Stand der Technik bekannten und in der landwirtschaftlichen Praxis bewährten Tränkeimern einzusetzen.

Gemäß einer weiteren Ausführungsform ist das Wandelement Teil einer Tränkstation.

Demnach ist es ebenfalls denkbar, die erfindungsgemäße Saugvorrichtung an einer stationären Tränke, die eine oder mehrere Saugvorrichtungen umfassen kann, einzusetzen.

Gemäß einer weiteren Ausführungsform weist der Saugnuckel eine erste Positionierhilfe und der Haltekörper eine zweite Positionierhilfe auf, so dass die Befestigung des Saugnuckels am Haltekörper festgelegt ist.

Demnach kann die Postionierung des Saugnuckels relativ zum Haltekörper mittels der korrespondierenden ersten und zweiten Positionierhilfe vorgegeben werden, wobei dazu eine nach innenweisende Kante am Saugnuckel und eine entsprechende Abflachung am Haltekörper als Verdrehsicherung in Form einer Positionierschräge verwendet werden kann.

Gemäß einer weiteren Ausführungsform weist der Saugnuckel eine erste Positionierhilfe und der Haltekörper eine zweite Positionierhilfe auf, so dass die Lage des Saugnuckels und des Haltekörpers relativ zu einem Tränkeimer vorgebbar ist.

Demnach wird die Positionierung des Saugnuckels und des Haltekörpers vorgegeben, was auf einfache Weise durch ein radial nach außen weisendes erhabenes Element am Saugnuckel und Haltekörper gebildet werden kann.

Des Weiteren wird ein Halter für eine oben beschriebene Saugvorrichtung angegeben, der einen ersten Durchbruch aufweist, der zur Befestigung des Halters an einer weiteren Vorrichtung geeignet ist, und der einen zweiten Durchbruch aufweist, so dass über erste Aufnahmeflächen und zweite Aufnahmeflächen das einen Kanal umschließende Gehäuseteil des Haltekörpers durch den zweiten Durchbruch ragt und bezüglich der Außenfläche in den Aufnahmeflächen zu liegen kommt.

Die Verwendung eines Halters ermöglicht es, die Saugvorrichtung nach Gebrauch zu reinigen und, ohne weitere Verschmutzungen anzusammeln, anschließend zu trocknen.

Der erste Durchbruch am Halter kann dabei so ausgeführt sein, dass er in einen Bodenring eines Tränkeimers einsteckbar ist.

Nachfolgend werden Ausführungsbeispiele der Erfindung anhand der Zeichnung näher erläutert. Es zeigen:
- Fig. 1: eine erfindungsgemäße Saugvorrichtung gemäß einer Ausführungsform in einer perspektivischen Seitenansicht,
- Fig. 2: ein Bestandteil der Saugvorrichtung gemäß Fig. 1 in einer perspektivischen Seitenansicht,
- Fig. 3: der Bestandteil aus Fig. 2 in einer Schnittansicht,
- Fig. 4: ein weiterer Bestandteil der Saugvorrichtung aus Fig. 1 in einer perspektivischen Seitenansicht,
- Fig. 5: der weitere Bestandteil aus Fig. 4 in einer Schnittansicht,
- Fig. 6: die Saugvorrichtung aus Fig. 1 in einer Schnittansicht,
- Fig. 7: die Verwendung einer Saugvorrichtung in einem Tränkeimer in einer Seitenansicht,
- Fig. 8: einen Halter für eine erfindungsgemäße Saugvorrichtung in einer perspektivischen Seitenansicht,
- Fig. 9: den Halter aus Fig. 8 in einer weiteren perspektivischen Seitenansicht,
- Fig. 10: den Halter aus Fig. 8 zusammen mit einer Saugvorrichtung in einer perspektivischen Seitenansicht,
- Fig. 11: eine weitere perspektivische Seitenansicht des Halters zusammen mit der Saugvorrichtung,
- Fig. 12: den Halter nebst Saugvorrichtung zusammen mit einem Tränkeimer in einer perspektivischen Seitenansicht,
- Fig. 13: den Halter mit einer Saugvorrichtung zusammen mit einem Tränkeimer in einer weiteren perspektivischen Seitenansicht,
- Fig. 14: eine Schnittansicht einer weiteren Ausführungsform einer erfindungsgemäßen Saugvorrichtung, und
- Fig. 15: eine weitere Ausführungsform einer erfindungsgemäßen Saugvorrichtung in einer perspektivischen Seitenansicht.

In den Figuren sind gleiche oder gleich wirkende Elemente mit den gleichen Bezugszeichen versehen.

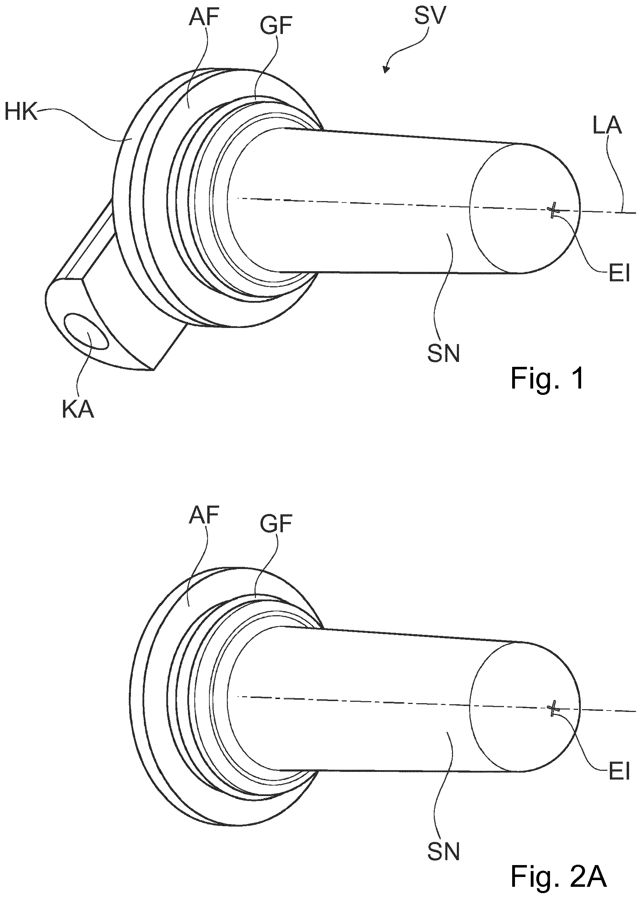

In Fig. 1 ist eine erfindungsgemäße Saugvorrichtung SV in einer perspektivischen Schrägansicht gezeigt. Die Saugvorrichtung SV umfasst einen Saugnuckel SN sowie einen Haltekörper HK, der mit dem Saugnuckel SN zusammen geführt ist. Über den Haltekörper HK und den Saugnuckel SN erstreckt sich zum Zuführen von Flüssignahrung ein Kanal KA, der an einem Ende des länglich ausgebildeten Saugnuckel SN in einen Einschnitt El mündet, der die Saugöffnung für ein Tier, beispielsweise ein Kalb oder ein Lamm bildet. Der Einschnitt El kann in anderen Ausführungen auch in Form eines Lochs, beispielsweise mit 2 mm, 4 mm oder 6 mm Durchmesser ausgebildet sein. Andere Varianten sind ebenfalls denkbar.

Der Saugnuckel SN ist aus einem elastischen Kunststoffmaterial, beispielsweise einem thermoplastischen Elastomer hergestellt. Der Haltekörper HK ist ebenfalls aus einem Kunststoffmaterial, beispielsweise Polyacetal gefertigt. Sowohl der Saugnuckel SN als auch der Haltekörper HK können mit einem antimikrobiell wirkenden Additiv versetzt sein.

Die Befestigung der Saugvorrichtung an einem Wandelement erfolgt über die Anlagefläche AF sowie die in einem bestimmten Abstand dazu angeordnete Gegenfläche GF. Sowohl die Anlagefläche AF als auch die Gegenfläche GF sind bezüglich einer Längsachse LA als radiale Vorsprünge gebildet. Die Öffnung an einem Wandelement ist erfindungsgemäß zwischen der Anlagefläche AF und der Gegenfläche GF angeordnet. Bevor die Befestigung der Saugvorrichtung SV an einem Wandelement näher beschrieben wird, werden nachfolgend nochmals die Bestandteile der Saugvorrichtung einzeln erläutert.

In Fig. 2A ist der Saugnuckel SN nochmals in einer perspektivischen Darstellung gezeigt. Er erkennt, dass die Gegenfläche GF in radialer Richtung bezüglich der Längsachse LA mit geringerer Höhe als die Anlagefläche AF ausgeführt ist. Demnach ist es möglich, den Saugnuckel SN an seinem dem Einschnitt El zugewandten Ende zu greifen und so durch eine Öffnung eines Wandelements zu ziehen, dass die Öffnung des Wandelements zwischen der Anlagefläche AF und der Gegenfläche GF zu liegen kommt. Dazu ist die Gegenfläche GF beispielsweise mit einem leicht abgerundeten Querschnitt geformt, so dass die Gegenfläche GF leichter durch eine Öffnung geführt werden kann. Sobald der durch die Gegenfläche GF aufgebaute Widerstand beim Durchdringen einer Öffnung überwunden ist, rastet der Saugnuckel SN in der Öffnung spürbar und eventuell hörbar ein. Für das Einsetzen des Saugnuckels SN in einem Wandelement bedarf es daher keinerlei weiterer Werkzeuge, so dass die Befestigung auf einfache Weise durchgeführt werden kann.

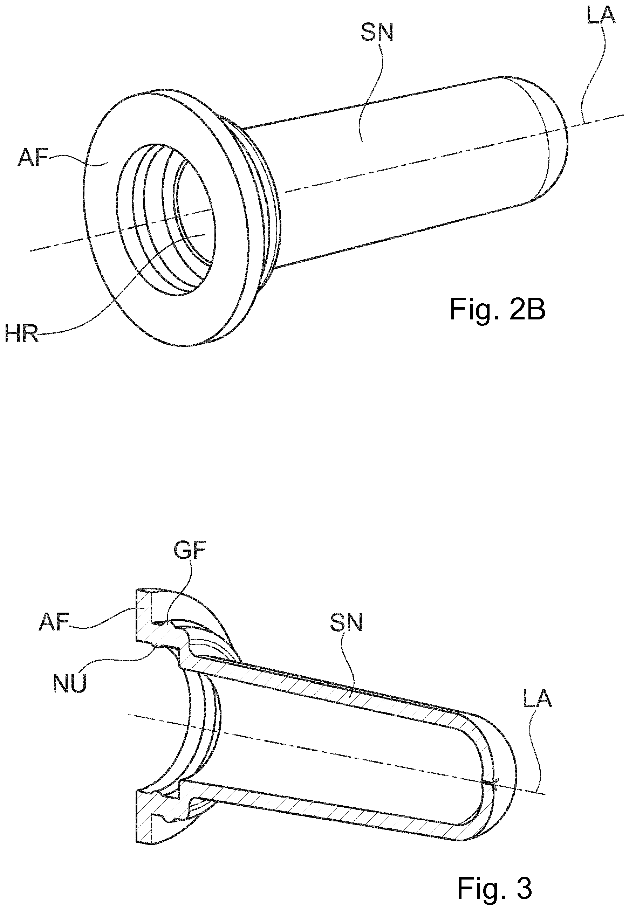

In Fig. 2B ist der Saugnuckel SN von einer gegenüber liegenden Seite gezeigt, so dass der Eintritt in einen Hohlraum HR im Inneren des Saugnuckels SN deutlich wird. In diesen Hohlraum HR wird zur Befestigung der Saugvorrichtung SV der Haltekörper HK eingeführt.

In Fig. 3 ist der Saugnuckel SN nochmals in einer geschnittenen Darstellung gezeigt. Der Schnitt folgt dabei in etwa einer Mittellinie entlang der Längsachse LA. Man erkennt, dass neben den nach außen gerichteten radialen Vorsprüngen der Anlagefläche AF bzw. der Gegenfläche GF eine nach innen gerichtete Nut GE im Inneren des Hohlraums HR ausgebildet ist. Die Nut ist dabei entlang der Längsachse radial umlaufend ausgebildet und liegt in einem Bereich, der zwischen der Anlagefläche AF und der Gegenfläche GF angeordnet ist und der späteren Position eines Wandelements entspricht.

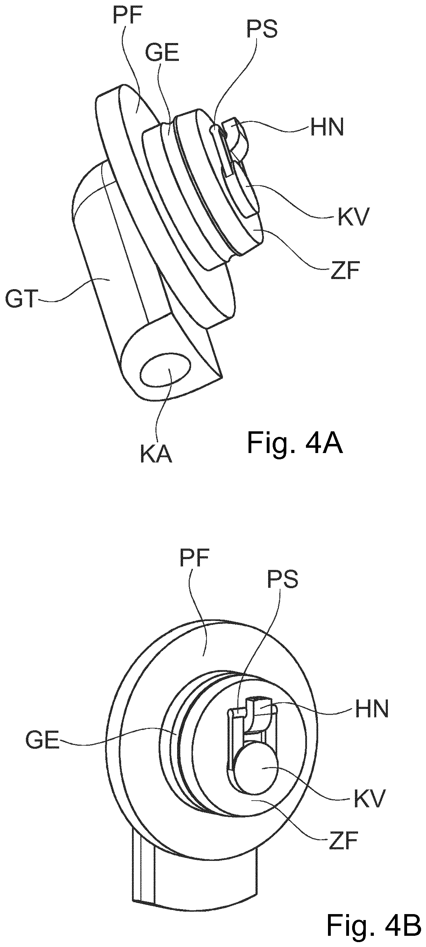

In Fig. 4A und Fig. 4B ist der Haltekörper HK in einer perspektivischen Seitenansicht gezeigt. Der Haltekörper HK weist einen zylindrischen Fortsatz ZF auf, der auf seiner Außenfläche mit einem Gegenelement NU das mit der auf dem Saugnuckel SN angeordneten Nut NU korrespondiert, und ebenfalls radial umlaufend angebracht ist. Desweiteren weist der zylindrische Fortsatz ZF ein Klappenventil KV auf, das in Form einer Pendelstange PS an einem Haken HN befestigt ist und die dem Saugnuckel SN zugeordnete Öffnung des Kanals KA bedeckt. Der zylindrische Fortsatz ZF geht in eine Planfläche PF über, die mit der außen liegenden Seite der Anlagefläche AF des Saugnuckels SN korrespondiert. Der Haltekörper HK wird mit dem zylindrischen Fortsatz ZF in den Hohlraum HR des Saugnuckels SN eingeführt. Dabei kommt die Nut GE in dem Gegenelement NU zu liegen, so dass der Saugnuckel SN über den Haltekörper HK entsprechend in einer Öffnung eines Wandelements gehalten wird. Der den Kanal KA nach unten umgebende Teil des Haltekörpers HK ist als Gehäuseteil GT angedeutet.

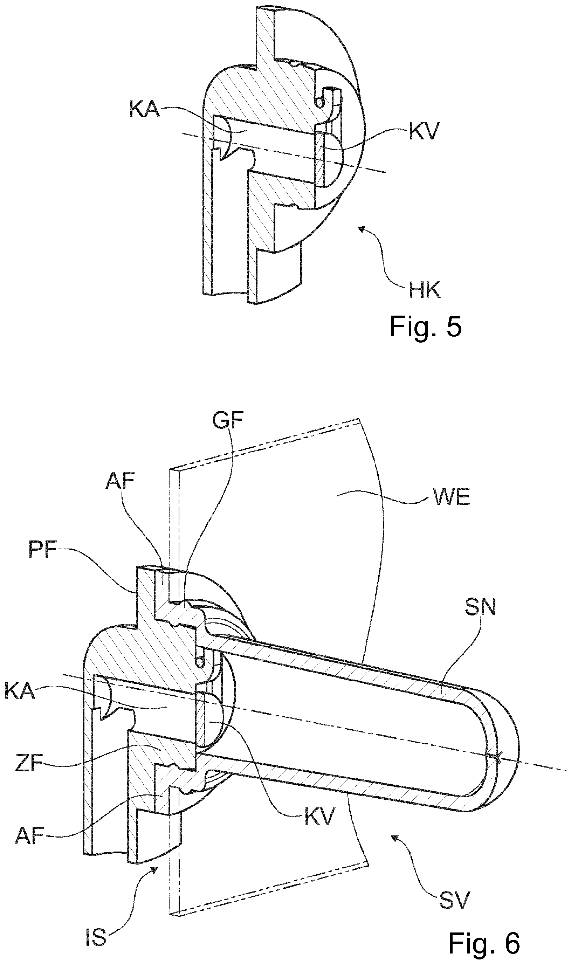

Die Funktion des Haltekörpers HK wird anhand der Fig. 5 nochmals näher verdeutlicht, wobei in Fig. 5 wiederum eine geschnittene Darstellung etwa entlang der Längsachse LA (siehe Fig. 1) gewählt wurde. Man erkennt, dass sich der Kanal KA bis zu dem Klappventil KV fortsetzt, so dass durch Saugen eines Nutztiers Flüssigkeit über den Kanal KA und den Saugnuckel SN aufgenommen werden kann.

Die Befestigung der Saugvorrichtung SV an einem Wandelement WE wird unter Bezugnahme auf Fig. 6 nochmals anhand einer geschnittenen Darstellung gezeigt. Man erkennt, dass das Wandelement WE zwischen der Anlagefläche AF und der Gegenfläche GF eine entsprechende Öffnung aufweist, wobei die mit dem Gegenelement NU korrespondierende Nut GE ebenfalls im Bereich des Wandelements WE zu liegen kommt. Die Anlagefläche AF wirkt dabei bezüglich einer Innenseite IS des Wandelements WE als Dichtung. Die Befestigung der Saugvorrichtung SV erfolgt dabei zweistufig, wobei zuerst der Saugnuckel SN durch die Öffnung im Wandelement WE wie oben beschrieben durchgeführt wird, und anschließend von der Innenseite IS her mit dem Haltekörper HK befestigt wird. Dabei ist sowohl das Durchdringen der Gegenflächen GF als auch das Einrasten der Nut GE Gegenelement NU hörbar bzw. spürbar. Die Demontage der Saugvorrichtung SV erfolgt in umgekehrter Richtung. Demnach wird zuerst der Haltekörper HK an der Innenseite IS entfernt und anschließend der Saugnuckel SN in Richtung der Innenseite IS geschoben. Anstelle des in Fig. 6 gezeigten Kanals KA können auch andere Rohrverbindungen oder Schläuche für eine Zufuhr von Flüssignahrung sorgen.

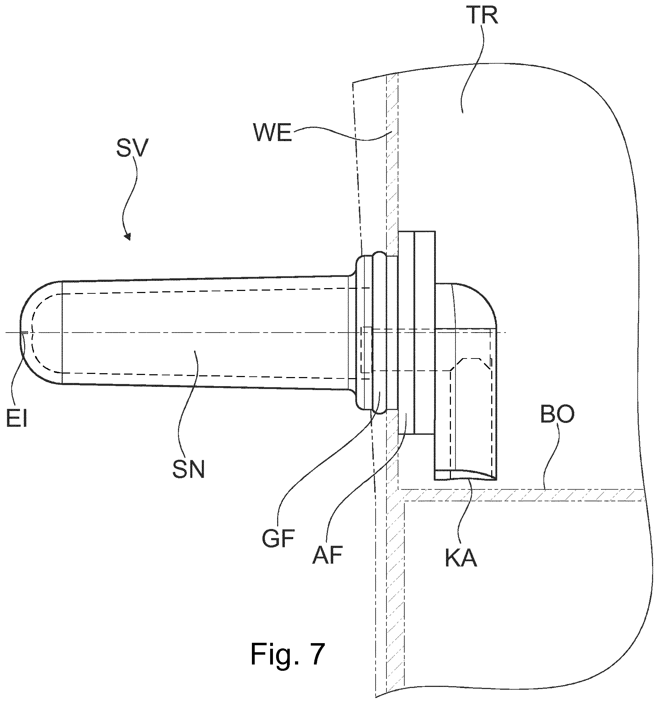

In Fig. 7 wird abschließend nochmals die Verwendung der Saugvorrichtung SV zusammen mit einem Tränkeimer TR erläutert. Man erkennt, dass der Tränkeimer TR im Bereich zwischen der Gegenfläche GF und der Anlagefläche AF eine entsprechende Öffnung aufweist, so dass die Saugvorrichtung wie oben beschrieben am Tränkeimer TR befestigt werden kann. Die rückwärtige Seite des Haltekörpers HK ist dabei so ausgebildet, dass der Kanal bis zu einem Boden BO des Tränkeimers TR geführt ist, so dass keine oder nahezu keine Flüssignahrung im Tränkeimer TR verbleibt.

Anstelle eines Tränkeimers TR kann die erfindungsgemäße Saugvorrichtung SV auch zusammen mit einer Tränkstation (nicht in Fig. 7 gezeigt) eingesetzt werden. Dabei kann die rückwärtige Seite des Haltekörpers HK mit einem Schlauchanschluss versehen sein. Desweiteren ist es vorgesehen, dass anders als der in den Figuren gezeigte Saugstutzen verwendet werden kann.

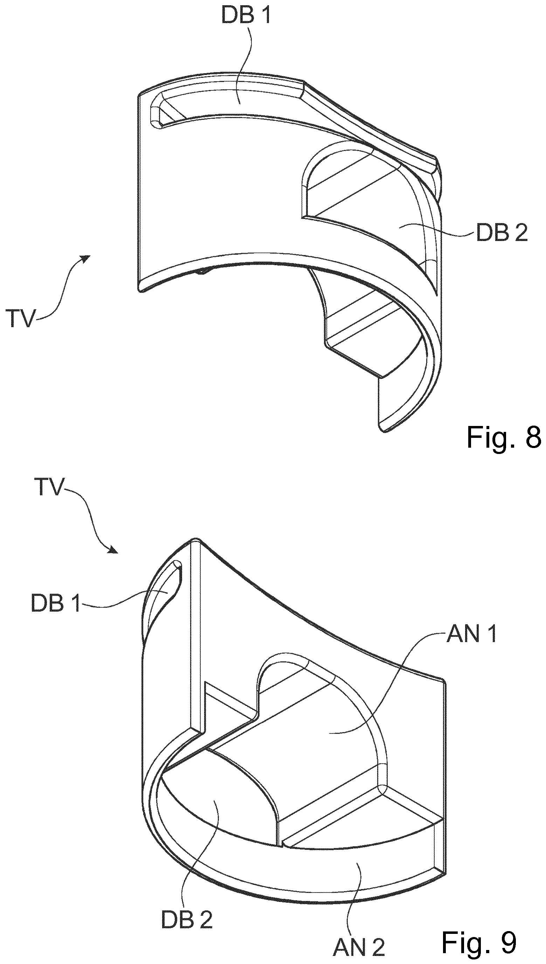

Um Keimbildung oder die Ansammlung von Krankheitserregern sowie generell die Stallhygiene zu verbessern ist es erforderlich, die im Zusammenhang mit den Fig. 1 bis 7 beschriebene Saugvorrichtung SV nach Gebrauch zu reinigen und zu trocknen. Um den Trocknungsvorgang zu erleichtern, wird für die erfindungsgemäße Saugvorrichtung SV nachfolgend unter Bezugnahme auf Fig. 8 ein Halter beschrieben, der als Trocknungshilfsvorrichtung eine Befestigung der Saugvorrichtung SV schafft. Der Halter TV, der in Fig. 8 mit dem Bezugszeichen TV benannt ist, weist dazu einen ersten Durchbruch DB1 auf, der zum Einhängen des Halters TV verwendet wird. Desweiteren ist ein zweiter Durchbruch DB2 vorhanden, durch den das den Kanal KA umschließende Gehäuseteil GT geführt werden kann.

Der Halter TV ist in Fig. 9 nochmals von einer gegenüber liegenden Seite in einer perspektivischen Darstellung gezeigt. Man erkennt, dass der Halter TV eine erste Aufnahmefläche AN1 aufweist, in die das Gehäuseteil GT geführt wird. Eine zweite Aufnahmefläche AN2, die den Außenkonturen der Anlagefläche AF und des Haltekörpers HK im Bereich der Planfläche PF folgt, ermöglicht es, die Saugvorrichtung SV, d.h. den Haltekörper HK zusammen mit dem Saugnuckel SN, einzuführen. Die Gestaltung der ersten Aufnahmefläche AN1 und der zweiten Aufnahmefläche AN2 folgen somit den Außenkonturen im Bereich der Anlagefläche AF des Saugnuckels SN sowie der Gegenfläche GF am Haltekörper HK und dem Gehäuseteil GT des Haltekörpers HK.

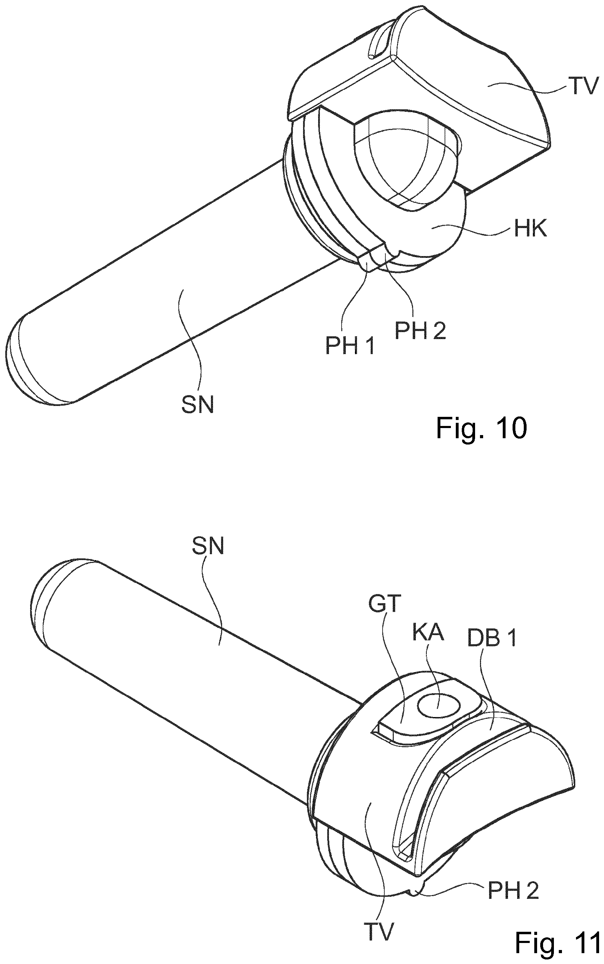

Der zusammengefügte Zustand ist in Fig. 10 gezeigt. Man erkennt, dass die Haltevorrichtung TV geeignet ist, den Saugnuckel SN zusammen mit dem Haltekörper HK aufzunehmen.

In Fig. 11 ist der zusammengebaute Zustand gemäß Fig. 10 von der gegenüberliegenden Seite gezeigt. Man erkennt, dass der Haltekörper HK mit dem den Kanal KA umschließenden Teil durch den Halter TV tritt, so dass dieser sicher im Halter TV befestigt ist. Mittels des ersten Durchbruchs DB1 wird somit eine Aufhängung geschaffen, die dazu dient, den Halter TV zusammen mit dem Saugnuckel SN und dem Haltekörper HK zu befestigen.

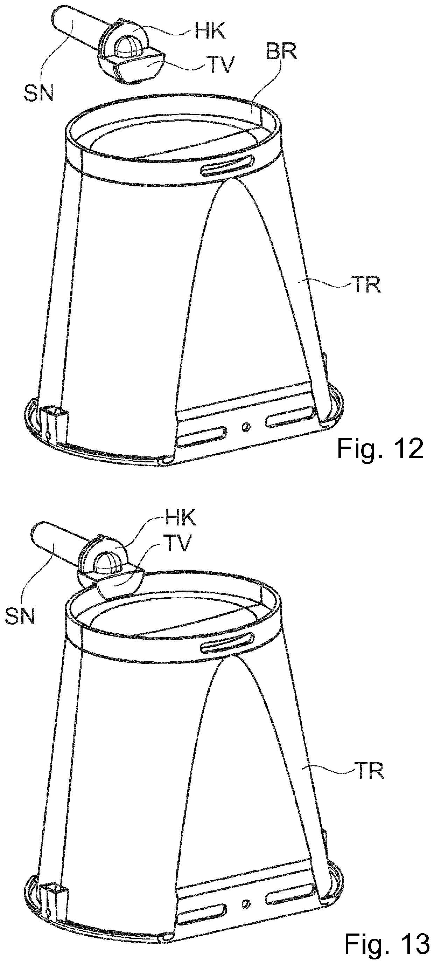

Vorteilhafterweise wird dazu ein umgedrehter Tränkeimer TR verwendet, wie in Fig. 12 gezeigt ist. Der Tränkeimer TR weist typischerweise an seinem Boden einen Bodenrand BR auf, der als ringförmige Struktur unterhalb des Bodens ausgebildet ist. In diesen Bodenrand BR kann nun, wie in Fig. 13 gezeigt ist, der erste Durchbruch DB1 geführt werden, so dass die Saugvorrichtung SV mittels des Halters TV sicher am Tränkeimer TR befestigt werden kann, so dass dieser nach Gebrauch dort getrocknet werden kann. Der erste Durchbruch DB1 kann selbstverständlich auch an anderen Stellen bzw. Vorrichtungen befestigt werden und ist nicht auf die gezeigte Befestigung mittels des Tränkeimers TR beschränkt.

Die im Zusammenhang mit den Fig. 1 bis 7 beschriebenen Ausführungsformen der Saugvorrichtung SV wurden jeweils symmetrisch bezüglich der Längsachse LA in Bezug zu einer Öffnung in einem Tränkeimer ausgeführt. In manchen Anwendungsbeispielen kann es jedoch vorteilhaft sein, sowohl den Saugnuckel SN als auch den Haltekörper HK mit einer Positionierhilfe zu versehen, um die Orientierung beim Einsetzen in einen Tränkeimer TR vorzugeben. Dazu ist beispielsweise im Zusammenhang mit Fig. 10 eine erste Positionierhilfe PH1 beschrieben, die radial nach außen weisend an der Anlagefläche AF des Saugnuckels SN in Form einer Nase angeordnet ist. Eine entsprechende zweite Positionierhilfe ist in identischen Abmessungen am Haltekörper HK angeordnet. Die erste Positionierhilfe PH1 und die zweite Positionierhilfe PH2 geben nun beim Einsetzen der Saugvorrichtung SV in einen Tränkeimer TR eine Lage um die Längsachse LA vor.

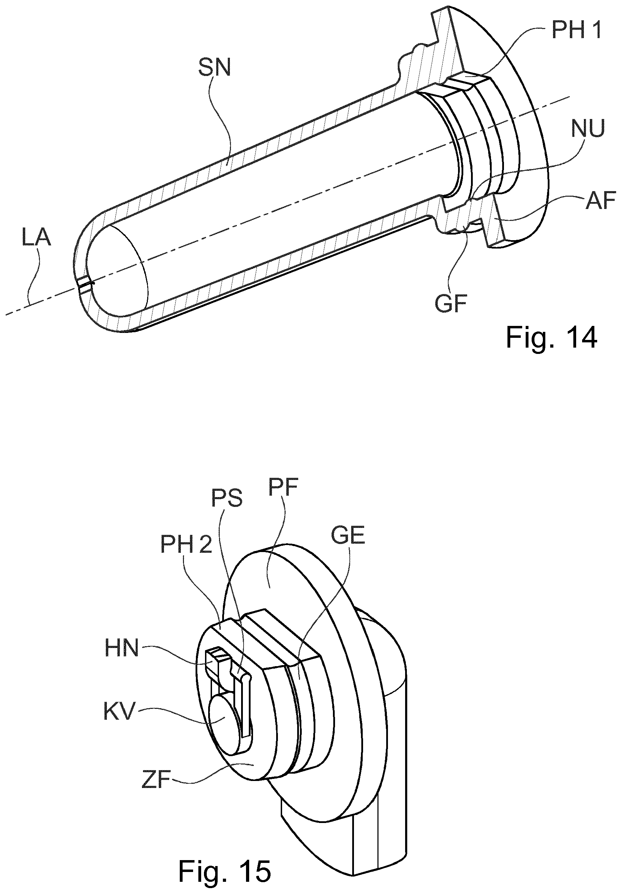

In Fig. 14 ist eine weitere Ausführungsform einer Positionierhilfe gezeigt. In diesem Ausführungsbeispiel umfasst die erste Positionierhilfe PH1 am Saugnuckel SN auf der Innenseite der Anlagefläche AF ein kurzes vertikales Segment, so dass die Rotationssymmetrie um die Längsachse LA gebrochen ist. Die erste Positionierhilfe PH1 korrespondiert mit einer zweiten Positionierhilfe PH2, die am zylindrischen Fortsatz ZF korrespondierend in Form der zweiten Positionierhilfe PH2 ausgeführt ist. Demnach kann der Saugnuckel SN nur in einer vorgegebenen Form auf dem Haltekörper HK aufgebracht werden.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen der angehängten Ansprüche in mancherlei Weise abwandelbar.

## Patentansprüche

1. Saugvorrichtung, insbesondere für einen Tränkeimer (TR) oder für eine Tränkstation zur Aufzucht von Tieren, wie z. B. Kälber oder Lämmer, umfassend einen entlang einer Längsachse (LA) angeordneten elastischen Saugnuckel (SN), der eine an einer Innenseite (IS) eines Wandelements (WE) anbringbare Anlagefläche (AF) und in Richtung der Längsachse (LA) beabstandet zur Anlagefläche (AF) eine Gegenfläche (GF) aufweist, die als radiale Vorsprünge ausgebildet sind, so dass der Saugnuckel (SN) über die Gegenfläche (GF) durch eine Öffnung in dem Wandelement (WE) führbar ist, wobei der Abstand der Anlagefläche (AF) zur Gegenfläche (GF) an eine Wandstärke des Wandelements (WE) angepasst ist, **dadurch gekennzeichnet, dass** ein Haltekörper (HK) mit einem Klappenventil (KV) von der Innenseite (IS) des Wandelements (WE) in einen durch den Saugnuckel (SN) begrenzten Hohlraum (HR) führbar und dort über eine radial umlaufende Nut (GE) und ein korrespondierendes Gegenelement (NU) lösbar fixiert ist, wobei die Nut (NU) und das Gegenelement (GE) zwischen der Anlagefläche (AF) und der Gegenfläche (GF) angeordnet sind und wobei die Nut (GE) auf dem Haltekörper (HK) und das korrespondierende Gegenelement (NU) auf dem Saugnuckel (SN) angeordnet sind.

2. Saugvorrichtung nach Anspruch 1, bei der die Anlagefläche (AF) in einer Ebene senkrecht zur Längsachse (LA) als Kreisringfläche ausgeführt ist.

3. Saugvorrichtung nach einem der Ansprüche 1 bis 2, bei der die Gegenfläche (GF) entlang der Längsachse (LA) mit einem abgerundeten Querschnitt gebildet ist.

4. Saugvorrichtung nach einem der Ansprüche 1 bis 3, bei der die Anlagefläche (AF) auf der der Innenseite (IS) des Wandelements (WE) zugewandten Seite eben ausgeführt ist.

5. Saugvorrichtung nach einem der Ansprüche 1 bis 4, bei der der Haltekörper (HK) auf der Innenseite (IS) des Wandelements (WE) eine rohrförmige Verlängerung oder einen Anschluss für ein Rohr oder einen Schlauch aufweist.

6. Saugvorrichtung nach einem der Ansprüche 1 bis 5, bei der das Klappenventil (KV) an einem Haken (HN) oberhalb einer Öffnung im Haltekörper (HK) eingehängt ist.

7. Saugvorrichtung nach einem der Ansprüche 1 bis 6, bei der der Saugnuckel (SN) und der Haltekörper i(HK) m Bereich der Öffnung des Wandelements (WE) einen im Wesentlichen kreisförmigen Querschnitt aufweisen.

8. Saugvorrichtung nach einem der Ansprüche 1 bis 7, bei der der Saugnuckel (SN) aus einem elastischen Kunststoffmaterial, insbesondere einem thermoplastischen Elastomer gefertigt ist.

9. Saugvorrichtung nach einem der Ansprüche 1 bis 8, bei der der Haltekörper (HK) aus einem Kunststoffmaterial, insbesondere aus Polyacetal gefertigt ist.

10. Saugvorrichtung nach einem der Ansprüche 1 bis 9, bei der der Saugnuckel (SN) und/oder der Haltekörper (HK) eine antimikrobielle Wirkung aufweisen.

11. Saugvorrichtung nach einem der Ansprüche 1 bis 10, bei der das Wandelement (WE)Teil eines Tränkeimers (TR) ist.

12. Saugvorrichtung nach einem der Ansprüche 1 bis 10, bei der das Wandelement (WE) Teil einer Tränkstation ist.

13. Saugvorrichtung nach einem der Ansprüche 1 bis 12, bei der der Saugnuckel (SN) eine erste Positionierhilfe (PH1) aufweist und der Haltekörper (HK) eine zweite Positionierhilfe (PH2) aufweist, so dass die Befestigung des Saugnuckels (SN) am Haltekörper (HK) festgelegt ist.

14. Saugvorrichtung nach einem der Ansprüche 1 bis 12, bei der der Saugnuckel (SN) eine erste Positionierhilfe (PH1) aufweist und der Haltekörper (HK) eine zweite Positionierhilfe (PH2) aufweist, so dass die Lage des Saugnuckels (SN) und des Haltekörpers (HK) relativ zu einem Tränkeimer (TR) vorgebbar ist.

15. Saugvorrichtung (SV) nach einem der Ansprüche 1 bis 14 mit einem Halter, der einen ersten Durchbruch (DB1) aufweist, der zur Befestigung des Halters (TV) an einer weiteren Vorrichtung geeignet ist, und der einen zweiten Durchbruch (DB2) aufweist, so dass über erste Aufnahmeflächen (AN1) und zweite Aufnahmeflächen (AN2) das einen Kanal (KA) umschließende Gehäuseteil (GT) des Haltekörpers (HK) durch den zweiten Durchbruch (DB2) ragt und bezüglich der Außenfläche in den Aufnahmeflächen (AN1, AN2) zu liegen kommt.

16. Saugvorrichtung nach Anspruch 15, bei dem der erste Durchbruch (DB1) so ausgeführt ist, dass er in einen Bodenring (BR) eines Tränkeimers (TR) einsteckbar ist.

## Claims

1. Suckling device, in particular for a drinking pail (TR) or for a drinking station for rearing animals, such as calves or lambs, comprising a flexible suckling teat (SN) which is arranged along a longitudinal axis (LA) and which has a contact surface (AF) that can be attached to an inner face (IS) of a wall element (WE), and a counter surface (GF) spaced apart from the contact surface (AF) in the direction of the longitudinal axis (LA), which surfaces are designed as radial projections such that the suckling teat (SN) can be guided through an opening in the wall element (WE) via the counter surface (GF), the distance between the contact surface (AF) and the counter surface (GF) being adapted to a wall thickness of the wall element (WE), **characterized in that** a holding body (HK) comprising a flap valve (KV) can be guided from the inner face (IS) of the wall element (WE) into a cavity (HR) delimited by the suckling teat (SN) and is releasably secured there by means of a radially circumferential groove (GE) and a corresponding counter element (NU), the groove (NU) and the counter element (GE) being arranged between the contact surface (AF) and the counter surface (GF), the groove (GE) being arranged on the holding body (HK) and the corresponding counter element (NU) being arranged on the suckling teat (SN).

2. Suckling device according to claim 1, wherein the contact surface (AF) is designed as an annular surface in a plane perpendicular to the longitudinal axis (LA).

3. Suckling device according to either claim 1 or claim 2, wherein the counter surface (GF) is formed having a rounded cross section along the longitudinal axis (LA).

4. Suckling device according to any of claims 1 to 3, wherein the contact surface (AF) is designed to be flat on the face that faces the inner face (IS) of the wall element (WE).

5. Suckling device according to any of claims 1 to 4, wherein the holding body (HK) on the inner face (IS) of the wall element (WE) has a tubular extension or a connection for a tube or a hose.

6. Suckling device according to any of claims 1 to 5, wherein the flap valve (KV) is suspended on a hook (HN) above an opening in the holding body (HK).

7. Suckling device according to any of claims 1 to 6, wherein the suckling teat (SN) and the holding body (HK) have a substantially circular cross section in the region of the opening of the wall element (WE).

8. Suckling device according to any of claims 1 to 7, wherein the suckling teat (SN) is made of a flexible plastics material, in particular a thermoplastic elastomer.

9. Suckling device according to any of claims 1 to 8, wherein the holding body (HK) is made of a plastics material, in particular of polyacetal.

10. Suckling device according to any of claims 1 to 9, wherein the suckling teat (SN) and/or the holding body (HK) have an antimicrobial effect.

11. Suckling device according to any of claims 1 to 10, wherein the wall element (WE) is part of a drinking pail (TR).

12. Suckling device according to any of claims 1 to 10, wherein the wall element (WE) is part of a drinking station.

13. Suckling device according to any of claims 1 to 12, wherein the suckling teat (SN) has a first positioning aid (PH1) and the holding body (HK) has a second positioning aid (PH2) such that the fastening of the suckling teat (SN) on the holding body (HK) is set.

14. Suckling device according to any of claims 1 to 12, wherein the suckling teat (SN) has a first positioning aid (PH1) and the holding body (HK) has a second positioning aid (PH2) such that the position of the suckling teat (SN) and the holding body (HK) relative to a drinking pail (TR) can be specified.

15. Suckling device (SV) according to any of claims 1 to 14, comprising a holder which has a first through-opening (DB1) suitable for fastening the holder (TV) to an additional device, and which has a second through-opening (DB2) such that the housing part (GT) of the holding body (HK) enclosing a channel (KA) protrudes through the second through-opening (DB2) via first receiving surfaces (AN1) and second receiving surfaces (AN2) and comes to rest in the receiving surfaces (AN1, AN2) with respect to the outer surface.

16. Suckling device according to claim 15, wherein the first through-opening (DB1) is designed such that it can be inserted into a base ring (BR) of a drinking pail (TR).

## Revendications

1. Dispositif d'aspiration, notamment pour un seau d'abreuvement (TR) ou une station d'abreuvement destinée à l'élevage d'animaux tels que des veaux ou des agneaux, le dispositif comprenant une tétine (SN) élastique disposée le long d'un axe longitudinal (LA), laquelle tétine présente une surface de contact (AF) pouvant être fixée à la face interne (IS) d'un élément de paroi (WE), et une contre-surface (GF) espacée de la surface de contact (AF) dans la direction de l'axe longitudinal (LA), lesquelles surfaces sont réalisées sous la forme de saillies radiales, de sorte que la tétine (SN) peut être guidée sur la contre-surface (GF) à travers une ouverture dans l'élément de paroi (WE), l'espacement entre la surface de contact (AF) et la contre-surface (GF) étant adapté à une épaisseur de paroi de l'élément de paroi (WE), **caractérisé en ce qu'**un corps de support (HK) comportant une soupape à clapet (KV) peut être guidé depuis la face interne (IS) de l'élément de paroi (WE) dans une cavité (HR) délimitée par la tétine (SN), et y est fixé de manière amovible par l'intermédiaire d'une rainure (GE) radialement circonférentielle et d'un contre-élément correspondant (NU), la rainure (NU) et le contre-élément (GE) étant disposés entre la surface de contact (AF) et la contre-surface (GF), et la rainure (GE) étant disposée sur le corps de support (HK) et le contre-élément correspondant (NU) sur la tétine (SN).

2. Dispositif d'aspiration selon la revendication 1, dans lequel la surface de contact (AF) est conçue sous la forme d'une surface annulaire dans un plan perpendiculaire à l'axe longitudinal (LA).

3. Dispositif d'aspiration selon l'une des revendications 1 à 2, dans lequel la contre-surface (GF) est formée avec une section transversale arrondie le long de l'axe longitudinal (LA).

4. Dispositif d'aspiration selon l'une des revendications 1 à 3, dans lequel la surface de contact (AF) est réalisée de façon plane sur la face tournée vers la face interne (IS) de l'élément de paroi (WE).

5. Dispositif d'aspiration selon l'une des revendications 1 à 4, dans lequel le corps de support (HK) présente, sur la face interne (IS) de l'élément de paroi (WE), une extension tubulaire ou un raccord pour un tube ou un tuyau.

6. Dispositif d'aspiration selon l'une des revendications 1 à 5, dans lequel la soupape à clapet (KV) est suspendue à un crochet (HN) au-dessus d'une ouverture dans le corps de support (HK).

7. Dispositif d'aspiration selon l'une des revendications 1 à 6, dans lequel la tétine (SN) et le corps de support (HK) présentent une section transversale sensiblement circulaire dans la région de l'ouverture de l'élément de paroi (WE).

8. Dispositif d'aspiration selon l'une des revendications 1 à 7, dans lequel la tétine (SN) est fabriquée en un matériau plastique élastique, notamment en un élastomère thermoplastique.

9. Dispositif d'aspiration selon l'une des revendications 1 à 8, dans lequel le corps de support (HK) est fabriqué en un matériau plastique, notamment en polyacétal.

10. Dispositif d'aspiration selon l'une des revendications 1 à 9, dans lequel la tétine (SN) et/ou le corps de support (HK) présentent un effet antimicrobien.

11. Dispositif d'aspiration selon l'une des revendications 1 à 10, dans lequel l'élément de paroi (WE) fait partie d'un seau d'abreuvement (TR).

12. Dispositif d'aspiration selon l'une des revendications 1 à 10, dans lequel l'élément de paroi (WE) fait partie d'une station d'abreuvement.

13. Dispositif d'aspiration selon l'une des revendications 1 à 12, dans lequel la tétine (SN) présente une première aide au positionnement (PH1), et le corps de support (HK) présente une seconde aide au positionnement (PH2), de sorte que la fixation de la tétine (SN) au corps de support (HK) est définie.

14. Dispositif d'aspiration selon l'une des revendications 1 à 12, dans lequel la tétine (SN) présente une première aide au positionnement (PH1), et le corps de support (HK) présente une seconde aide au positionnement (PH2), de sorte que la position de la tétine (SN) et du corps de support (HK) par rapport à un seau d'abreuvement (TR) peut être prédéfinie.

15. Dispositif d'aspiration (SV) selon l'une des revendications 1 à 14, comportant un support qui présente une première percée (DB1) servant à fixer le support (TV) à un autre dispositif, et qui présente une seconde percée (DB2), de sorte que la partie de carter (GT) du corps de support (HK) renfermant un canal (KA) fait saillie, à travers la seconde percée (DB2), au-dessus de premières surfaces de réception (AN1) et de secondes surfaces de réception (AN2), et vient reposer dans les surfaces de réception (AN1, AN2), par rapport à la surface externe.

16. Dispositif d'aspiration selon la revendication 15, dans lequel la première percée (DB1) est conçue de manière à pouvoir être emboîtée dans un anneau de fond (BR) d'un seau d'abreuvement (TR).
